# EUROPEAN PATENT APPLICATION

(11) **EP 4 729 752 A1**
(43) Date of publication of application: **22.04.2026**
(21) Application number: 25202262.9
(22) Date of filing: 15.09.2025
(51) Int. Cl.: F01P 7/00

(54) **COMPUTER SYSTEM AND LIQUID COOLING SYSTEM COMPRISING SUCH A COMPUTER SYSTEM**

(30) Priority: 15.10.2024 SE 2451026
(71) Applicant: Volvo Truck Corporation, 405 08 Göteborg (SE)
(72) Inventor: BARKAH, Dani, Eskilstuna (SE); NEILSON, Rohan, Västerås (SE); LEMAITRE, Guillaume, Göteborg (SE)
(74) Representative: Ström & Gulliksson AB

(57) **Abstract**

Present disclosure relates to a computer system (700) comprising processing circuitry (702) configured to: obtain temperature data (T) comprising a temperature (T1, T2, T3) at a first input port (131), a second input port (132) and an output port (133) connected to the first and second input port (131, 132) of a liquid cooling system (100), obtain flow distribution data comprising a flow distribution value indicative of the flow from the first and second input port (131, 132) at the output port (133), determine an expected temperature (TE1, TE2, TE3) at the first input port (131), the second input port (132) and the output port (133) based on the flow distribution value and the temperature data (T), determine an expected flow distribution based on the temperature data (T), and provide control data for control of the liquid cooling system (100).

## Description

### TECHNICAL FIELD

The disclosure relates generally to liquid cooling systems. In particular aspects, the disclosure relates to a computer system and a liquid cooling system comprising such a computer system. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In the field of thermal management, particularly within liquid cooling systems for vehicles such as electrical vehicles, efficient regulation of temperature and flow distribution is of great importance. Current solutions may exhibit shortcomings, which hinder their ability to maintain desirable performance and reliability.

### SUMMARY

One major limitation of existing systems is their dependency on singular feedback control mechanisms. These systems often rely heavily on a single controlled variable, such as a temperature or flow sensor, making them vulnerable to sensor failures. This dependency can lead to system shutdowns or transitions to limp modes when sensor anomalies occur, thereby disrupting overall operations and increasing maintenance needs. This dependency can also limit the use of broader strategies and information so as to avoid increasing exposure to such events. It may also be the case that parallel validated operating modes are forced.

Furthermore, while some systems incorporate additional sensors for feedforward control, they still fall short in providing comprehensive solutions. These systems typically lack the necessary fallback mechanisms to maintain operation in the event of sensor data loss or inaccuracies. As a result, they are unable to offer the redundancy required for seamless operation under all conditions.

Prior art systems also struggle with balancing feedback and feedforward control elements effectively. This imbalance often results in a compromised ability to adapt to dynamic changes in operating conditions, leading to inefficiencies in thermal regulation and increased energy consumption.

Moreover, many current solutions demand extensive hardware, which in turn raises costs without delivering proportional benefits. This inefficiency is particularly evident when additional functionalities are required but cannot be justified due to the increased hardware complexity and cost.

In summary, there may be a need for innovative thermal management systems that can address these deficiencies.

According to a first aspect of the disclosure a computer system may be provided. The computer system comprises processing circuitry configured to: obtain temperature data comprising a temperature at a first input port, a second input port, and an output port connected to the first and second input port of a liquid cooling system, obtain flow distribution data comprising a flow distribution value indicative of the flow from the first and second input port at the output port, determine an expected temperature at the first input port, the second input port, and the output port based on the flow distribution value and the temperature data, determine an expected flow distribution based on the temperature data, and based on at least one of: the temperature or the expected temperature at the first input port, the temperature or the expected temperature at the second input port, the temperature or the expected temperature at the output port, and the flow distribution value or the expected flow distribution, provide control data for control of the liquid cooling system. The first aspect of the disclosure may seek to improve the reliability and efficiency of liquid cooling systems by accurately managing temperature and flow distribution data, even in the presence of sensor discrepancies. A technical benefit may include enhanced system adaptability and reduced dependency on singular sensor data, thereby offering more robust thermal management compared to prior art solutions.

Optionally in some examples, including in at least one preferred example, the processing circuitry may be further configured to select the temperature or the expected temperature at the first input port, the temperature or the expected temperature at the second input port, the temperature or the expected temperature at the output port, and the flow distribution value or expected flow distribution as input parameters for the control of the liquid cooling system, and provide control data for control of the liquid cooling system based on said input parameters. A technical benefit may include enhanced precision in selecting the most relevant parameters, which improves the accuracy and reliability of the cooling system's control.

Optionally in some examples, including in at least one preferred example, the processing circuitry may be further configured to determine whether the temperatures and the flow distribution value are unavailable or outside a tolerance range, and responsive to one or more of at least one of said temperatures and the flow distribution value being unavailable or outside of the tolerance range, provide control data for control of the liquid cooling system based on one or more of the expected temperature and the expected flow distribution corresponding to one or more of said at least one of the temperatures and flow distribution value being unavailable or outside of the tolerance range. A technical benefit may include increased fault tolerance and system reliability by allowing the system to continue functioning effectively even when sensor data is unavailable and an increased flexibility in the control of the cooling system.

Optionally in some examples, including in at least one preferred example, the processing circuitry may be further configured to determine whether the temperatures and the flow distribution value are one or more of available and inside a tolerance range, and responsive to one or more of at least one of said temperatures and the flow distribution value being available and inside of the tolerance range, provide control data for control of the liquid cooling system based on one or more of the temperature and the flow distribution value being one or more of available and inside of the tolerance range. A technical benefit may include maintaining performance by ensuring that the system responds appropriately when sensor data is within expected limits.

Optionally in some examples, including in at least one preferred example, the processing circuitry may be further configured to determine whether the expected temperatures and the expected flow distribution are unavailable or outside a plausibility range, and responsive to one or more at least one of said expected temperatures the expected flow distribution being unavailable or outside of the plausibility range, provide control data for control of the liquid cooling system based on one or more of the temperature and flow distribution value corresponding to one or more of said at least one of the expected temperatures and expected flow distribution being unavailable or outside of the plausibility range. A technical benefit may include enhancing robustness by ensuring the system can adapt and provide control even when calculated expectations are erroneous or unavailable.

Optionally in some examples, including in at least one preferred example, the processing circuitry may be further configured to provide control data based on at least one of one or more of a blended value based on the temperature and the expected temperature at the first input port, a blended value based on the temperature and the expected temperature at the second input port and a blended value based on the temperature and the expected temperature at the output port and a blended value based on the flow distribution value or the expected flow distribution, one or more of an average value based on the temperature and the expected temperature at the first input port, an average value based on the temperature and the expected temperature at the second input port and an average value based on the temperature and the expected temperature at the output port and an average value based on the flow distribution value or the expected flow distribution, one or more of a weighted average value based on the temperature and the expected temperature at the first input port, a weighted average value based on the temperature and the expected temperature at the second input port and a weighted average value based on the temperature and the expected temperature at the output port and a weighted average value based on the flow distribution value or the expected flow distribution. A technical benefit may include providing a more nuanced control strategy that enhances system adaptability and responsiveness to varying conditions.

Optionally in some examples, including in at least one preferred example, the expected temperature at the first input port may be determined independently from the temperature at the first input port obtained from the temperature data, the expected temperature at the second input port may be determined independently from the first temperature at the second input port obtained from the temperature data, the expected temperature at the output port may be determined independently from the temperature at the output port obtained from the temperature data and the expected flow distribution is determined independently from the flow distribution data. A technical benefit may include reducing reliance on direct sensor readings, thereby improving the system's resilience and operational stability.

Optionally in some examples, including in at least one preferred example, the temperature data may be obtained based on one or more temperature sensors at the output port, the first input port and the second input port. A technical benefit may include improving the accuracy and reliability of the temperature data used for system control, which can enhance the overall effectiveness of the cooling system.

Optionally in some examples, including in at least one preferred example, the temperature at the first and second input port and the output port may be based on a thermal model of the liquid cooling system. A technical benefit may include a reduced reliance on real-time sensor data, enhancing the robustness of the cooling solution.

Optionally in some examples, including in at least one preferred example, the expected temperature at the output port may be based on the temperature at the first and/or second input port. A technical benefit may include providing more accurate predictive control by utilizing input temperatures to estimate output conditions, thus improving system reliability.

Optionally in some examples, including in at least one preferred example, the expected temperature at the first input port may be based on the temperature at the second input port and the output port. A technical benefit may include providing an indication of the temperature in a manner allowing for an improved redundancy without introduction of additional complexity.

Optionally in some examples, including in at least one preferred example, the expected temperature at the second input port may be based on the temperature at the first input port and the output port. A technical benefit may include providing an indication of the temperature in a manner allowing for an improved redundancy without introduction of additional complexity.

Optionally in some examples, including in at least one preferred example, the first and second input ports may form a first and second input port of a fluid valve of the liquid cooling system and the output port may form an output port of said fluid valve. A technical benefit may include an improved flow distribution in a non-complex manner.

Optionally in some examples, including in at least one preferred example, the processing circuitry may be further configured to obtain flow distribution data provided as valve position data comprising a valve position of the fluid valve, determine the expected temperature at the first input port, the second input port and the output port based on the valve position and the temperature data, determine an expected flow distribution provided as an expected valve position based on the temperature data, and based on at least one of the temperature or the expected temperature at the first input port, the temperature or the expected temperature at the second input port, the temperature or the expected temperature at the output port, and the valve position or the expected valve position, provide control data for control of the liquid cooling system. A technical benefit may include enhancing control precision and reliability in the cooling system.

Optionally in some examples, including in at least one preferred example, the processing circuitry may be further configured to obtain first temperature data comprising a first temperature at a first input port, a second input port and an output port of the fluid valve, obtain valve position data of the valve position sensor comprising a first position of the fluid valve, determine a first expected valve position of the fluid valve based on the first temperature data, control the fluid valve to change the valve position of the fluid valve by a predetermined amount, obtain second temperature data comprising a second temperature at the first input port, at the second input port and the output port of the fluid valve, obtain second valve position data of the valve position sensor comprising a second position of the fluid valve, determine a second expected valve position based on the second temperature data, compare a change in expected valve position and the valve position, and provide control data for control of the liquid cooling system based on said comparison. A technical benefit may include improving valve control accuracy and reliability.

Optionally in some examples, including in at least one preferred example, the expected valve position may be based on the temperature at the first input port, the second input port and the output port of a fluid valve. A technical benefit may include providing precise control by using comprehensive temperature data to inform valve positioning, which can improve system efficiency.

Optionally in some examples, including in at least one preferred example, the first input port may be connected to a first pump of the liquid cooling system and the second input port is connected to a second pump of the liquid cooling system. A technical benefit may include enhancing control precision and reliability in the cooling system.

Optionally in some examples, including in at least one preferred example, the processing circuitry may be further configured to obtain flow distribution data provided as pump speed data comprising a pump speed ratio between the first pump and the second pump, determine the expected temperature at the first input port, the second input port and the output port based on the pump speed ratio and the temperature data, determine an expected flow distribution provided as an expected pump speed ratio based on the temperature data, and based on at least one of the temperature or the expected temperature at the first input port, the temperature or the expected temperature at the second input port, the temperature or the expected temperature at the output port, and the pump speed ratio or the expected pump speed ratio, provide control data for control of the liquid cooling system. A technical benefit may include improving pump control accuracy and reliability. Another technical benefit may include an enhanced protection against pump stall in such a configuration.

Optionally in some examples, including in at least one preferred example, the processing circuitry may be configured to based on each of the temperature or the expected temperature at the first input port, the temperature or the expected temperature at the second input port, the temperature or the expected temperature at the output port, and the pump speed ratio or the expected pump speed ratio, provide control data for control of the liquid cooling system, and wherein the processing circuitry may be further configured to select the temperature or the expected temperature at the first input port, the temperature or the expected temperature at the second input port, the temperature or the expected temperature at the output port, and the flow distribution value or expected flow distribution as input parameters for the control of the liquid cooling system, and provide control data for control of the liquid cooling system based on said input parameters. A technical benefit may include providing comprehensive control over the liquid cooling system by integrating multiple data sources, which enhances system reliability.

According to a second aspect, a liquid cooling system is provided. The liquid cooling system comprises a first input port connected to a cool liquid pathway and a second input port connected to a temperate liquid pathway and an output port connected to a temperature-controlled device, and a computer system according to any of the examples described herein. The second aspect of the disclosure may seek to improve the efficiency and accuracy of temperature regulation in liquid cooling systems by effectively managing the flow and mixing of liquids from different temperature pathways. A technical benefit may include enhanced precision and reliability in maintaining desired temperature levels for a temperature-controlled device, thereby improving system performance and reliability.

Optionally in some examples, including in at least one preferred example, the temperate liquid pathway may be a return path from the temperature-controlled device. A technical benefit may include improving the efficiency of the cooling system by enabling effective recirculation and reuse of heat-altered liquid, thereby enhancing overall thermal management.

Optionally in some examples, including in at least one preferred example, the liquid cooling system may further comprise a circulation device configured to control a flow of liquid in the liquid cooling system. A technical benefit may include providing precise control over liquid flow dynamics, which can improve cooling performance and energy efficiency.

Optionally in some examples, including in at least one preferred example, the temperature-controlled device may be a fuel cell stack. A technical benefit may include ensuring effective thermal regulation of fuel cells, which can improve their performance and longevity by maintaining desirable operating temperatures.

Optionally in some examples, including in at least one preferred example, the liquid cooling system may further comprise a fluid valve, wherein the first and second input ports may form a first and second input port of the fluid valve and the output port may form an output port of said fluid valve, wherein said fluid valve may be arranged to control flow ratios between the first input port and the second input port, and to provide the combined flow ratios at the output port of the fluid valve connected to the temperature-controlled device. A technical benefit may include enhancing the flexibility and precision of liquid flow management, thereby improving the system's ability to maintain desirable temperature levels in the temperature-controlled device.

According to a third aspect a vehicle is provided. The vehicle may comprise a liquid cooling system according to any of the examples described herein. The third aspect of the disclosure may seek to achieve a more reliable cooling system of the vehicle. A technical benefit may include enhanced precision and reliability in maintaining desired temperature levels for temperature-controlled devices of the vehicle, thereby improving system performance and reliability.

According to a fourth aspect a computer-implemented method is provided. The computer implemented method comprises: obtaining, by processing circuitry of a computer system, temperature data comprising a temperature at a first input port, a second input port and an output port connected to the first and second input port of a liquid cooling system, obtaining, by the processing circuitry, flow distribution data comprising a flow distribution value indicative of the flow from the first and second input port at the output port, determining, by the processing circuitry, an expected temperature at the first input port, the second input port and the output port based on the flow distribution value and the temperature data, determining, by the processing circuitry, an expected flow distribution based on the temperature data, and based on at least one of: the temperature or the expected temperature at the first input port, the temperature or the expected temperature at the second input port, the temperature or the expected temperature at the output port, and the flow distribution value or the expected flow distribution, providing, by the processing circuitry, control data for control of the liquid cooling system. The fourth aspect of the disclosure may seek to enhance the accuracy and efficiency of managing temperature and flow distribution in liquid cooling systems, ensuring optimal performance even under varying conditions. A technical benefit may include improved system reliability.

According to a fifth aspect, a computer program product is provided. The computer program product comprises program code for performing, when executed by processing circuitry of a computer system, the method according to any of the examples described herein. The fifth aspect may seek to enable new vehicles and/or legacy vehicles to be conveniently configured, by software installation/update, to enhance system adaptability and reduced dependency on singular sensor data.

According to a sixth aspect, a non-transitory computer-readable storage medium comprising instructions, which when executed by the processing circuitry of a computer system, cause the processing circuitry to perform the method of any of the examples described herein. The sixth aspect may seek to enable new vehicles and/or legacy vehicles to be conveniently configured, by software installation/update, to enhance system adaptability and reduced dependency on singular sensor data.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2** is an exemplary liquid cooling system according to an example.
**FIG. 3** is an exemplary liquid cooling system according to an example.
**FIG. 4** is an exemplary liquid cooling system according to an example.
**FIG. 5** is a block diagram of an exemplary computer system according to an example.
**FIG. 6** is a block diagram of an exemplary computer system according to an example.
**FIG. 7** is a flow-chart of an exemplary implementation of a computer system according to an example.
**FIG. 8** is a flow-chart depicting a computer-implemented method according to an example.
**FIG. 9** is an exemplary diagram of a computer program product according to an example.
**FIG. 10** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

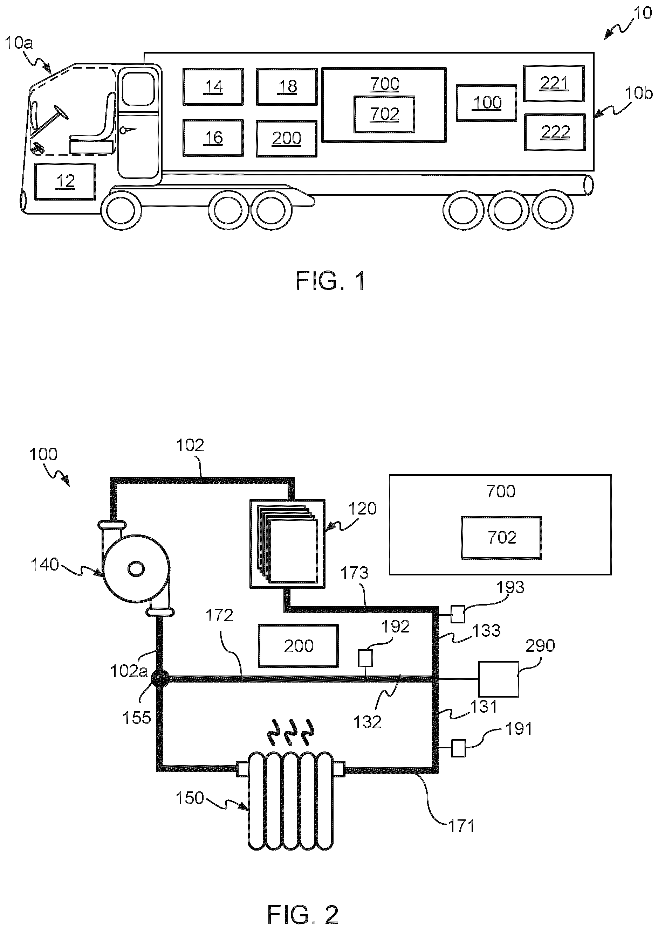

**FIG. 1** is an exemplary view of a vehicle **10** according to one example. The vehicle **10** comprises at least one liquid cooling system **100.** The at least one liquid cooling system **100** is configured to circulate coolant and to distribute heat flow to and from one or more components of the vehicle **10,** for example to and from one or more fuel cell system **221,** e.g. one or more fuel cell stacks, and/or one more battery systems **222,** e.g. one or more battery cell packs. The one or more fuel cell systems **221** and/or the one or more battery systems **222** may be located in a tractor **10a** and/or in a trailer **10b** of the vehicle **10.** The at least one liquid cooling system **100** is connected to, or forms part of, a liquid cooling control system **200.** The liquid cooling control system **200** is programmed to control the liquid cooling system **100,** as will be described further in the following.

The vehicle **10** comprises, at least to some extent, processing circuitry **702** forming part of a computer system **700.** The processing circuitry **702** is configured to implement functionality of the liquid cooling system **100,** which in turn is controlled by the liquid cooling control system **200.**

The vehicle **10** in **FIG. 1** comprises the computer system **700** and the liquid cooling control system **200.** The computer system **700** may be operatively connected to the liquid cooling control system **200.** The computer system **700** comprises processing circuitry **702.** The computer system **700** may comprise a storage device, advantageously a non-volatile storage device such as a hard disk drives (HDDs), solid-state drives (SSDs) etc. In some examples, the storage device is operatively connected to the computer system **700.** The liquid cooling control system **200** may comprise liquid cooling control system processing circuitry; the liquid cooling control system processing circuitry may be part of the processing circuitry **702** of the computer system **700.**

**FIG. 2** is an exemplary circuit of a liquid cooling system **100** according to an example. The liquid cooling system **100** is shown as being configured to cool a temperature controlled device **120.** The temperature controlled device **120** may be any type of suitable device, for example a device of the vehicle **10.**

The liquid cooling system **100** comprises a cool liquid pathway **171** and a temperate liquid pathway **172.** Further, the liquid cooling system **100** comprises an input port **131** connected to, e.g. in fluid communication with, the cool liquid pathway **172** and a second input port **132** connected to, e.g. in fluid communication with, the temperate liquid pathway **171.** Further, the liquid cooling system **100** comprises an output port **133,** the output port **133** is connected to, e.g. in fluid communication with, the temperature controlled device **120.** As previously described, the liquid cooling system **100** may comprise the computer system **700.**

The first input port **131** and the second input port **132** may be connected to the output port **133.** Thus, the first input port **131** and the second input port **132** may be in fluid communication with the output port **133.** The output port **133** may form a common outlet for the first input port **131** and the second input port **132.**

The liquid cooling system **100** is shown as comprising a cooling circuit **102** for a fuel cell system **220.** It should however be noted that this is one example only; the fluid cooling system **100** may be modified as will be further described below. The cooling circuit **102** may for example comprise the first input port **131,** the second input port **132,** the output port **133,** the cool liquid pathway **171** and/or the temperate liquid pathway **172.**

Hence, the temperature controlled device **120** may preferably be the fuel cell system **220,** for example in the form of a fuel cell stack.

The cooling circuit **102** circulates cooling fluid using at least one circulation device, e.g. pump, **140.** The liquid cooling system **100** may thus comprise a circulation device **140.** The circulation device **140** may be configured to control a flow of liquid, e.g. cooling liquid or coolant, in the liquid cooling system **100.**

Preferably, the at least one circulation device **140** is electronically controlled such that the total flow through the cooling circuit **102** can be adjusted. The liquid cooling system **100** further comprises a radiator **150** and a bypass junction **155** arranged upstream the radiator **150.** Hence, by means of the bypass junction **155** the cooling circuit **102** is branched from a single conduit **102a** to the temperate liquid pathway **172** and the cool liquid pathway **171** passing the radiator **150.** It should be noted that the bypass junction **155** may, as illustrated in **FIG. 2****,** be a passive component or it may be an active components, such as a controllable valve. It may be envisioned that a plurality of components may further be connected to the liquid cooling system such as a plurality of pathways and HVAC chillers, cabin heaters, coolant heaters etc..

The respective flow in the cool liquid pathway **171** and in the temperate liquid pathway **172** may be determined by appropriate control of a flow control device **290.** As will be explained in further detail later on, the flow control device **290** may comprise pumps and/or a mixing valve.

The first input port **131** may be cold inlet, the second input port **132** may be a hot inlet and the flow control device **290** may be configured to blend the flow from the cool liquid pathway **171** and the temperate liquid pathway **172.** The flow control device **290** may be connected to, e.g. in fluid communication with, or comprise the first input port **131** and the second input port **132.** The flow control device **290** may be configured to blend the flow from the cool liquid pathway **171** and the temperate liquid pathway **172** at a flow ratio depending on a number of parameters. The combined flow may exit through the outlet **133** which returns the flow to pass the temperature controlled device **120.**

In the depicted example, the temperate liquid pathway **172** is a return path from the temperature controlled device **120.** The temperate liquid pathway **172** may thus be arranged downstream of the temperature controlled device **120** and distribute liquid from the temperature controlled device **120** to the flow control device **290.**

The flow control device **290** is preferably controlled by the liquid cooling control system **200.** The fluid cooling control system **200** may preferably be implemented by the processing circuitry **702.**

In order to provide the desired control of the flow control device **290,** the liquid cooling system **100** may comprise one or more temperature sensors **191, 192, 193.** In the depicted example, the one more temperature sensors **191, 192, 193** may be arranged at the first input port **131,** the second input port **132** and the output port **133.**

In the depicted example, a first temperature sensor **191** may be arranged at the first input port **131.** The first temperature sensor **191** may be arranged in the cool liquid pathway **171.** The first temperature sensor **191** may be arranged as close to the flow control device **290** as possible. Accordingly, the temperature sensors may be arranged adjacent to said input ports and output port. The first temperature sensor **191** may be configured to obtain temperature measurement data associated with the temperature at the first input port **131,** e.g. in the cool liquid pathway **171.**

In the depicted example, a second temperature sensor **192** may be arranged at the second input port **132.** The second temperature sensor **192** may be arranged in the temperate liquid pathway **172.** The second temperature sensor **192** may be arranged as close to the flow control device **290** as possible. The second temperature sensor **192** may be configured to obtain temperature measurement data associated with the temperature at the second input port **132,** e.g. in the temperate liquid pathway **172.**

In the depicted example, a third temperature sensor **193** may be arranged at the output port **133.** The third temperature sensor **193** may be arranged as close to the flow control device **290** as possible. The third temperature sensor **193** may be configured to obtain temperature measurement data associated with the temperature at the output port **132.**

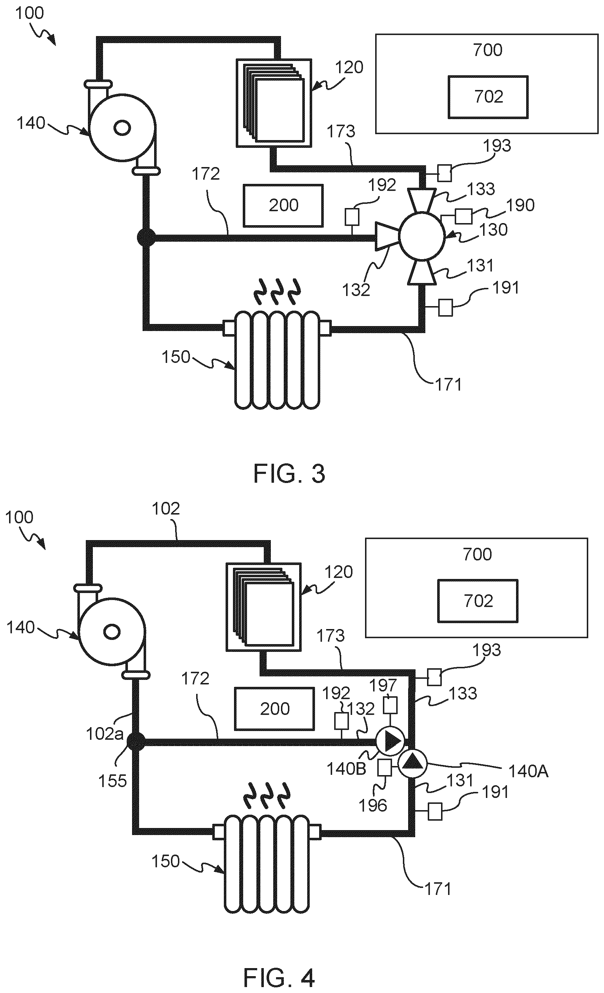

**FIGs. 3-4** depict the cooling system **100** of **FIG. 2** according to different examples. As will be explained, the flow control device **290** may for example be provided as one or more pumps and/or a fluid valve.

Referencing **FIG. 3****,** the flow control device **290** may be provided as a fluid valve **130.** In the depicted example, the first input port **131** may form a first input port of the fluid valve **130.** The second input port **132** may form a second input port of the fluid valve **130.** The output port **133** may form an output port **133** of the fluid valve **130.**

The fluid valve **130** may be a mixing valve. The fluid valve **130** may be configured to control distribution of flow from the first input port **131** and the second input port **132** to the output port **133.** Hence, the fluid valve **130** may be configured to control the flow ratio between the first input port **131** and the second input port **132.**

The respective flow in the temperate liquid pathway **172** and in the cool liquid pathway **171** may be determined by appropriate control of the fluid valve **130.** The fluid valve **130** may preferably be provided in the form of an electronically controlled three-way valve. The temperate liquid pathway **172** may be connected to the second input port **132** of the fluid valve **130,** while the cool liquid pathway **171** may be connected to first input port **131** of the same fluid valve **130.** The fluid valve **130** may be configured to blend the flow from the temperate liquid pathway **172** and the cool liquid pathway **171** at a flow ratio being dependent on the position of the fluid valve **130.** The combined flow will exit the output port **133** which returns the flow to pass the temperature controlled device **120.**

Worded differently, the fluid valve **130** may be arranged to control flow ratios between the first input port **131** and the second input port **132** and to provide the combined flow ratios at the output port **133.** The output port **133** may as previously described be connected to the temperature controlled device.

In order to control the operation of the fluid valve **130,** and thereby the overall performance of the liquid cooling system **100,** the fluid valve **130** may be mapped with regards to the flow ratio (i.e. the ratio between the flow in the temperate liquid pathway **172** and the cool liquid pathway **171)** as a function of the valve position. A desired flow ratio can thus be obtained by querying a map of the valve position as a function of the flow ratio for the resulting fluid valve position providing the desired flow ratio, and subsequent control of the fluid valve **130** to obtain this specific position. The fluid valve **130** may be connected to, or form part of, the liquid cooling control system **200.**

The fluid valve **130** may preferably be controlled by the liquid cooling control system **200.** A movable body inside the fluid valve **130** may be actuated and moved depending on the desired flow ratio, and the liquid cooling control system **200** may thus be configured to control the position of the movable body of the fluid valve **130.** The liquid cooling control system **200** may preferably be implemented by the processing circuitry **702.**

In order to provide for the desired control of the fluid valve **130,** the liquid cooling system **100** comprises the temperature sensors **191, 192, 193** previously described with reference to **FIG. 2****.**

In addition, in order to further provide for the desired control of the fluid valve **130,** the liquid cooling system **100** may comprise a valve position sensor **190.** The valve position sensor **190** may be configured to monitor the position of the fluid valve **190.** The valve position sensor **190** may thus be configured to provide an indication of the flow ratio between the flow from the first input port **131** and the second input port **132.** Similar to the temperature sensors **191, 192, 193,** the valve position sensor **190** may be operatively connected to the computer system **700,** e.g. the liquid cooling control system **200.**

Typically, the valve position sensor **190** for detecting the valve position of the fluid valve **130** may operate by measuring the angular displacement of a valve stem or actuator of the fluid valve **130.** This can be achieved through various sensing technologies such as a potentiometer, rotary encoder, or Hall effect sensor. To exemplify, a potentiometer may provide an analog signal proportional to the position of the fluid valve **130,** a rotary encoder may provide a digital signal representing incremental or absolute positions of the fluid valve **130,** a Hall effect sensor may detect magnetic fields to determine changes in the position of the fluid valve **130.** The sensor output from the valve position sensor **190** may be processed by processing circuitry **702,** e.g. the liquid cooling control system **200** to provide real-time feedback on the position of the fluid valve **130.**

It may be envisioned that the temperatures obtained by means of the temperature sensors **191, 192, 193** may be utilized to estimate and/or provide a valve position which in theory could replace the need for the valve position sensor **190.**

Turning to **FIG. 4****,** the flow control device **290** may be provided as a first pump **140A** and a second pump **140B.** Accordingly, the liquid cooling system **100** may comprise the first pump **140A** and the second pump **140B.** In the depicted example, the liquid cooling system **100** includes the circulation device **140** in addition to the first pump **140A** and the second pump **140B.** However, it may be envisioned that the first pump **140A** and the second pump **140B** may replace the circulation device **140** altogether.

In the depicted example, the first input port **131** may be connected to the first pump **140A** and the second input port **132** may be connected to the second pump **140B.**

The first pump **140A** may be configured to control distribution of flow to the first input port **131.** The second pump **140B** may be configured to control distribution of flow to the second input port **132.** Hence, the first pump **140A** and the second pump **140B** may be configured to control the flow ratio between the first input port **131** and the second input port **132.**

The flow in the temperate liquid pathway **172** may be controlled by means of the second pump **140B.** The flow in the cool liquid pathway **171** may be controlled by means of the first pump **140A.** The first pump **140A** and the second pump **140B** may preferably be provided in the form of electronically controlled pumps.

The first pump **140A** and the second pump **140B** may be configured to blend the flow from the temperate liquid pathway **172** and the cool liquid pathway **171** at a flow ratio being dependent on the speed of the first pump **140A** and the second pump **140B,** e.g. the speed ratio between said first and second pump. The combined flow will exit the output port **133** which returns the flow to pass the temperature controlled device **120.**

The first pump **140A** and the second pump **140B** may preferably be controlled by the liquid cooling control system **200.** The speed of the first pump **140A** and the second pump **140B** may thus be controlled by the liquid cooling control system **200** depending on the desired flow ratio. As aforementioned, the liquid cooling control system **200** may preferably be implemented by the processing circuitry **702.**

In order to provide for the desired control of the first pump **140A** and the second pump **140B,** the liquid cooling system **100** comprises the temperature sensors **191, 192, 193** previously described with reference to **FIG. 2****.**

In addition, in order to further provide for the desired control of the fluid valve **130,** the liquid cooling system **100** may comprise a first pump sensor **197** and a second pump sensor **198.** The first pump sensor **197** and the second pump sensor **198** may be configured to monitor the speed of the first pump **140A** and the second pump **140B,** respectively, or the flow generated by the first pump **140A** and the second pump **140B,** respectively. The first pump sensor **197** and the second pump sensor **198** may thus be configured to provide an indication of the flow ratio between the flow from the first input port **131** and the second input port **132.** Similar to the temperature sensors **T1, T2, T3,** the first pump sensor **197** and the second pump sensor **198** may be operatively connected to the computer system **700,** e.g. the liquid cooling control system **200.**

The present disclosure may address a need for efficient and reliable temperature management in liquid cooling systems, particularly those used in electrified vehicles. Traditional cooling systems often face challenges in maintaining desirable temperature regulation due to their reliance on singular feedback mechanisms and limited adaptability to changing conditions. Such systems may be susceptible to sensor failures, potentially leading to inaccurate temperature readings and, consequently, poor cooling performance. This can result in overheating, which poses a risk to the integrity and longevity of the components being cooled.

The present disclosure introduces a computer system and a computer-implemented method that aim to enhance the accuracy and efficiency of managing temperature and flow distribution in liquid cooling systems. It achieves this by utilizing processing circuitry configured to obtain detailed temperature data from multiple input and output ports connected to a fluid valve within the cooling system. The system also gathers flow distribution data, which indicates the flow from the input ports to the output port. By determining expected temperatures and flow distributions based on this comprehensive data, the system may provide precise control data for the cooling system. In addition to a localized control which is inherently tolerant of changes in the rest of the system, the flexibility of inputs further enables this flexibility in configuration and connected devices.

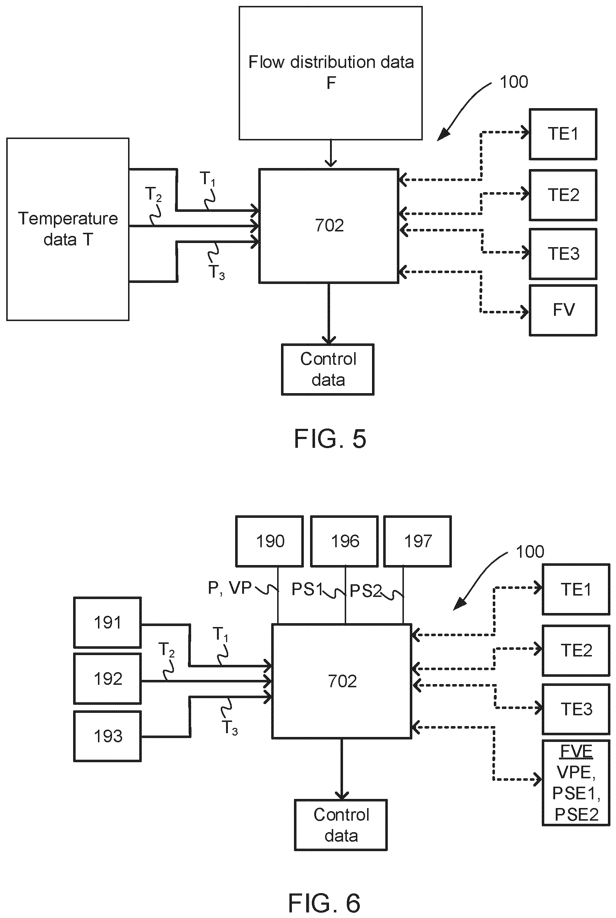

**FIG. 5** depicts a schematic flow chart of an implementation of a computer system **700** according to one example of the present disclosure. The processing circuitry **702,** which implements the liquid cooling control system **200,** is programmed to provide control data for the control of the liquid cooling system **100.**

One potential advantage of this present disclosure is its capability to determine expected values independently of real-time sensor data. This feature may allow the system to maintain operational efficiency even when sensor data is compromised or unavailable, thus providing a robust fallback mechanism. Additionally, the system can dynamically adjust control parameters based on blended, average, or weighted average values of the obtained and expected data, offering a more nuanced approach to temperature regulation.

The present disclosure may be superior to prior art due to its adaptability and resilience. By integrating a method that can independently calculate expected values and respond to discrepancies, the system may reduce reliance on potentially unavailable sensor data, enhancing the overall reliability of the cooling process. Furthermore, its ability to manage flow ratios through fluid valves and integrate with additional components such as fuel cell stacks or multiple pumps showcases its versatility and applicability across various scenarios.

Overall, the present disclosure represents a potential improvement over existing solutions by providing a more reliable, adaptable, and precise method of managing liquid cooling systems, which may ensure improved performance and extend the lifespan of temperature-sensitive components.

The processing circuitry **702** of the computer system **700** is configured to obtain temperature data **T.** The temperature data **T** comprises a temperature **T1** at the first input port **131.** The temperature **T1** may be considered a first port temperature **T1.** The temperature data **T** comprises a temperature **T2** at the second input port **132.** The temperature **T2** may be considered a second port temperature **T2.** The temperature data **T** comprises a temperature **T3** at the output port **133.** The temperature **T3** may be considered an output port temperature **T3.**

The processing circuitry **702** of the computer system **700** is configured to obtain flow distribution data **F.** The flow distribution data **F** comprises a flow distribution value **FV.** The flow distribution value **FV** is indicative of, e.g. associated with, the flow from the first input port **131** and the second input port **132.**

The processing circuitry **702** of the computer system **700** is configured to determine an expected temperature **TE1, TE2, TE3** at the first input port **131,** the second input port **132** and the output port **133** based on the flow distribution data **F.** Accordingly, the processing circuitry **702** may be configured to determine an expected temperature **TE1** at the first input port **131.** The expected temperature **TE1** may be considered a first port expected temperature **TE1.** The processing circuitry **702** may be configured to determine an expected temperature **TE2** at the second input port **132.** The expected temperature **TE2** may be considered a second port expected temperature **TE2.** The processing circuitry **702** may be configured to determine an expected temperature **TE3** at the output port **133.** The expected temperature **TE3** may be considered an output port temperature **TE3.**

The processing circuitry **702** may be configured to determine an expected flow distribution based on the temperature data **T.**

Further, based on at least one the temperature **T1** or the expected temperature **TE1** at the first input port **131,** the temperature **T2** or the expected temperature **TE2** at the second input port **132,** the temperature **T3** or the expected temperature **TE3** at the output port **133,** and the flow distribution value **FV** or the expected flow distribution, the processing circuitry **702** may be configured to provide control data for the control of the liquid cooling system **100.**

**FIG. 5** depicts a more detailed example of the computer system **700** of **FIG. 6****.** The processing circuitry **702,** e.g. the liquid cooling control system **200,** may be configured to select for all of the parameters between the expected value and the determined value. Accordingly, the processing circuitry **702,** e.g. the liquid cooling control system **200,** may be configured to select the temperature **T1** or the expected temperature **TE1** at the first input port **131** as input parameter for the control of the liquid cooling system **100** and provide control data based on said input parameter.

The processing circuitry **702,** e.g. the liquid cooling control system **200,** may be configured to select the temperature **T2** or the expected temperature **TE2** at the second input port **132** as input parameter for the control of the liquid cooling system **100** and provide control data based on said input parameter.

The processing circuitry **702,** e.g. the liquid cooling control system **200,** may be configured to select the temperature **T3** or the expected temperature **TE3** at the output port **133** as input parameter for the control of the liquid cooling system **100** and provide control data based on said input parameter.

Accordingly, the control of the liquid cooling system **100** may be based on a mixture of temperatures and expected temperatures in combination with either a flow distribution value or an expected flow distribution value. As will be further explained, the value selected may also in itself be based on a combination of a temperature and a corresponding expected temperature and/or combination of a flow distribution value and an expected flow distribution value.

In the depicted example, the temperature data **T** may be obtained based on the one or more temperature sensors **191, 192, 193** at the output port **133,** the first input port **131** and the second input port **132.** The temperature data **T** may thus be configured as sensor data obtained from said temperature sensors **191, 192, 193.** The processing circuitry **702** may comprise a sensor data module configured to obtain the temperature data **T.**

In one example, the temperature data **T,** e.g. the temperatures **T1, T2, T3** may be based on a thermal model of the liquid cooling system **100.** According to such an example, the computer system **700,** e.g. the liquid cooling control system **200,** may comprise such a thermal model. The processing circuitry **702** may be configured to access said thermal model for determining the temperatures **T1, T2, T3.** The thermal model may comprise various components and parameters used for its implementation. Key components of the thermal model may include representations of the physical layout and materials used in the cooling system, such as the pipes, heat exchangers, and cooling channels. These components may influence the heat transfer characteristics and flow dynamics within the system. Parameters that may be important for the thermal model include the fluid properties such as viscosity, density, and specific heat capacity, which affect how the fluid absorbs and transfers heat. Additionally, flow rates and pressure drops across different sections of the system are essential parameters, as they determine the fluid's velocity and its ability to effectively transport heat away from critical components. Environmental conditions such as ambient temperature and humidity may also be incorporated into the model to provide a more comprehensive understanding of the cooling system's performance under varying external conditions. Furthermore, heat generation profiles from the components being cooled, such as processors or power electronics, may be important inputs to the model, as they dictate the thermal load that the cooling system must manage. By integrating these components and parameters, the thermal model enables the processing circuitry **702** to simulate and predict the thermal behavior of the liquid cooling system **100.** This predictive capability allows for more precise control strategies, improving the cooling process and enhancing the overall efficiency and reliability of the system.

The computer system **700** may be designed to enhance the accuracy and reliability of temperature predictions within the liquid cooling system **100** by independently determining expected temperatures and flow distributions. Specifically, the expected temperature **TE1** at the first input port **131** may be determined independently from the temperature **T1** at the first input port **131** obtained from the temperature data **T.** This independent determination allows the system to anticipate the thermal conditions at the first input port **131** without relying solely on real-time sensor data, thus providing an added layer of robustness to the control of the liquid cooling system **100.**

Similarly, the expected temperature **TE2** at the second input port **132** may be determined independently from the first temperature **T2** at the second input port **132** obtained from the temperature data **T.** This independent determination allows the system to anticipate the thermal conditions at the second input port **132** without relying solely on real-time sensor data, thus providing an added layer of robustness to the control of the liquid cooling system **100.**

Moreover, the expected temperature **TE3** at the output port **133** may be determined independently from the temperature **T3** at the output port **133** obtained from the temperature data **T.** This independent determination allows the system to anticipate the thermal conditions at the output port **133** without relying solely on real-time sensor data, thus providing an added layer of robustness to the control of the liquid cooling system **100.**

Additionally, the expected flow distribution may be determined independently from the flow distribution data **F.** By decoupling the expected flow distribution from for real-time measurements, the system can estimate fluid dynamics within the cooling network more reliably, thereby improving flow management and the overall efficiency and effectiveness of the cooling process. This approach may allow for the system to continue to operate effectively under a wide range of conditions, providing a robust solution for advanced thermal management.

In the present disclosure, the computer system **700** is enhanced by utilizing expected temperature calculations to improve the management of the liquid cooling system **100.** Notably, the expected temperature **TE3** at the output port **133** may be based on the temperature **T1, T2** at the first input port **131** and/or second input port **132.** This configuration allows the system to determine the expected temperature **TE3** at the output port **133** with redundancy, thereby enhancing the precision of the cooling system's performance.

Furthermore, the expected temperature **TE1** at the first input port **131** may be based on the temperature **T2, T3** at the second input port **132** and/or the output port **133.** This configuration allows the system to determine the expected temperature **TE1** at the first input port **131** with redundancy, thereby enhancing the precision of the cooling system's performance.

Additionally, the expected temperature **TE2** at the second input port **132** may be based on the temperature **T1, T3** at the first input port **131** and/or the output port **133.** This configuration allows the system to determine the expected temperature **TE2** at the second input port **132** with redundancy, thereby enhancing the precision of the cooling system's performance.

These configurations leverage interdependent temperature data to enhance the system's ability to predict and control thermal dynamics, potentially leading to more efficient and responsive liquid cooling management.

The election of appropriate value may be utilized for maintaining operation of the liquid cooling system **100** even in cases of sensor errors, faulty components etc., by implementing a redundancy in the control of the liquid cooling system **100.** Potential applications of the election will be described in the following.

In one example, the processing circuitry **702,** e.g. the liquid cooling control system **200,** may be configured to determine whether the temperatures **T1, T2, T3** are unavailable and/or outside a tolerance range. Further, the processing circuitry **702,** e.g. the liquid cooling control system **200,** may be configured to determine whether the flow distribution value **FV** is unavailable and/or outside a tolerance range. In response to at least one of the temperatures **T1, T2, T3** and/or the flow distribution value **FV** being unavailable or outside of the tolerance range, the processing circuitry **702,** e.g. the liquid cooling control system **200,** may be configured to provide control data for control of the liquid cooling system **100** based on the expected temperature **TE1, TE2, TE3** and/or expected flow distribution **FVE** corresponding to said at least one of the temperatures **T1, T2, T3** and/or flow distribution value **FV** being unavailable or outside of the tolerance range.

In one example, the processing circuitry **702,** e.g. the liquid cooling control system **200,** may be further configured to determine whether the temperatures **T1, T2, T3** and the flow distribution value **FV** are available and/or inside a tolerance range, and responsive to at least one of said temperatures **T1, T2, T3** and/or the flow distribution value **FV** being available and/or inside of the tolerance range. The processing circuitry **702,** e.g. the liquid cooling control system **200,** may be configured to provide control data for control of the liquid cooling system **100** based on the temperature **T1, T2, T3** and/or the flow distribution value being available and/or inside of the tolerance range. This functionality allows the system to ensure improved performance by utilizing data that falls within acceptable limits, thereby maintaining efficient cooling operations.

In one example, the processing circuitry **702** may be further configured to determine whether the expected temperatures **TE1, TE2, TE3** and the expected flow distribution **FVE** are unavailable or outside a plausibility range. The processing circuitry **702,** e.g. the liquid cooling control system **200,** may be configured to in response to at least one of said expected temperatures **TE1, TE2, TE3** and/or the expected flow distribution **FVE** being unavailable or outside of the plausibility range, provide control data for control of the liquid cooling system **100** based on the temperature **T1, T2, T3** and/or flow distribution value **FV** corresponding to said at least one of the expected temperatures **TE1, TE2, TE3** and/or expected flow distribution **FVE** being unavailable or outside of the plausibility range. Accordingly, if any of the expected temperatures **TE1, TE2, TE3** is determined to be unusable, the corresponding temperature **T1, T2, T3** may be utilized instead for the control of the liquid cooling system **200.** Correspondingly, if the expected flow distribution **FVE** is determined to be unusable, the flow distribution value **FV** may be utilized instead for the control of the liquid cooling system **100.** This ensures that the system can effectively manage scenarios where the expected values are not reliable, thereby enhancing the robustness of the cooling management process.

It may further be envisioned that a combination of values may be utilized in order to provide an accurate determination of the temperature and flow distribution.

In one example, the processing circuitry **702,** e.g. the liquid cooling control system **200,** may be configured to provide control data (for the control of the liquid cooling system **100)** based on at least one of a blended value based on the temperature **T1** and the expected temperature **TE1** at the first input port **131,** a blended value based on the temperature **T2** and the expected temperature **TE2** at the second input port **132** and/or a blended value based on the temperature **T3** and the expected temperature **TE3** at the output port **133** and/or a blended value based on the flow distribution value **FV** or the expected flow distribution **FVE.** In one example, the processing circuitry **702,** e.g. the liquid cooling control system **200,** may be configured to determine said blended values.

In one example, the processing circuitry **702,** e.g. the liquid cooling control system **200,** may be configured to provide control data based on at least one of an average value based on the temperature **T1** and the expected temperature **TE1** at the first input port **131,** an average value based on the temperature **T2** and the expected temperature **TE2** at the second input port **132** and/or an average value based on the temperature **T3** and the expected temperature **TE3** at the output port **133** and/or an average value based on the flow distribution value **FV** or the expected flow distribution **FVE.** In one example, the processing circuitry **702,** e.g. the liquid cooling control system **200,** may be configured to determine said average values.

In one example, the processing circuitry **702,** e.g. the liquid cooling control system **200,** may be configured to provide control data based on at least one of a weighted average value based on the temperature **T1** and the expected temperature **TE1** at the first input port **131,** a weighted average value based on the temperature **T2** and the expected temperature **TE2** at the second input port **132** and/or a weighted average value based on the temperature **T3** and the expected temperature **TE3** at the output port **133** and/or a weighted average value based on the flow distribution value **FV** or the expected flow distribution **FVE.** In one example, the processing circuitry **702,** e.g. the liquid cooling control system **200,** may be configured to determine said weighted average values.

The weightings assigned to the values may be determined from one or more operational parameters. For example, the weight may be determined based on one or more of flow rate data associated with the flow rate in the liquid cooling system **100,** flow configuration data associated with the configuration of the liquid cooling system **100,** component state data associated with the state of the components of the liquid cooling system **100,** heat load data associated with the heat load of the liquid cooling system **100.**

The use of both values for the control data allows the system to refine control strategies by integrating various data points, thus improving the accuracy and responsiveness of the cooling processes.

The characteristics of the flow distribution value **FV** and the expected flow distribution **FVE** may vary depending on the characteristics of the flow control device **290.**

As described with reference to **FIG. 2****,** the flow control device **290** may be provided as a fluid valve **130.**

According to such an example, the processing circuitry **702,** e.g. the liquid cooling control system **200,** may be configured to obtain flow distribution data provided as valve position data P, which includes a valve position **VP** of the fluid valve **130.**

The processing circuitry **702,** e.g. the liquid cooling control system **200,** may be configured to determine the expected temperature **TE1, TE2, TE3** at the first input port **131,** the second input port **132,** and the output port **133** based on the valve position **VP** and the temperature data **T.** Further, the processing circuitry **702,** e.g. the liquid cooling control system **200,** may be configured to determine an expected flow distribution provided as an expected valve position **VPE** based on the temperature data **T.** The processing circuitry **702,** e.g. the liquid cooling control system **200,** may be configured to provide control data for control of the liquid cooling system **100** based on at least one of the temperature **T1** or the expected temperature **TE1** at the first input port **131,** the temperature **T2** or the expected temperature **TE2** at the second input port **132,** the temperature **T3** or the expected temperature **TE3** at the output port **133,** and the valve position **VP** or the expected valve position **VPE.**

The processing circuitry **702,** e.g. the liquid cooling control system **200,** may utilize at least one of the following parameters: the temperature **T1** or the expected temperature **TE1** at the first input port **131;** the temperature **T2** or the expected temperature **TE2** at the second input port **132;** the temperature **T3** or the expected temperature **TE3** at the output port **133** and the valve position **VP** or the expected valve position **VPE.**

This comprehensive approach allows the computer system **700** to improve the performance of the liquid cooling system **100** by integrating real-time data and modeling. The ability to adjust control strategies based on both current and expected values ensures that the cooling system operates efficiently and reliably under varying conditions.

The expected valve position **VPE** may be based on the temperature **T1** at the first input port **131,** the temperature **T2** at the second input port **132** and the temperature **T3** at the output port **133.** Accordingly, the processing circuitry **702** may be based on the temperatures in each of the ports of the fluid valve **130** calculate the expected valve position **VPE.** To achieve the intended function of determining the expected valve position **VPE,** the processing circuitry **702** may utilize temperature measurements collected from the first input port **131,** the second input port **132,** and the output port **133.** These temperature readings, denoted as **T1, T2,** and **T3** respectively, may provide insight into the thermal dynamics occurring within the fluid valve **130.** In some examples, the processing circuitry **702** may employs a computational algorithm that integrates these temperature values to predict the expected valve position **VPE.** This algorithm may use a set of predetermined correlations or mathematical models that relate temperature changes to valve position adjustments. By analyzing the temperature gradients or differences between the input and output ports, the system can infer the desirable valve position to maintain desired flow and temperature conditions throughout the cooling network.

In one example, the processing circuitry **702,** e.g. the liquid cooling control system **200,** may be configured to determine a valve integrity indicator associated with the integrity of the fluid valve **130** or a valve characteristics indicator associated with the characteristics of the fluid valve **130** based on the expected valve position **VPE.** Such characteristics may include backlash and/or open area vs angle data etc.

For instance, if the temperature **T1** at the first input port **131** is different from the temperature **T3** at the output port **133,** this may indicate a need to adjust the valve position to either increase or decrease the flow from the first input port. Similarly, variations in temperature **T2** at the second input port **132** compared to the output port **133** can signal the need for fine-tuning the valve position to achieve balanced flow distribution. It may be envisioned that the processing circuitry **702** may continuously monitor these temperature inputs and may recalculate the expected valve position **VPE** in real-time. This dynamic adjustment process ensures that the fluid valve **130** operates desirably, responding promptly to any thermal changes detected at the ports. As a result, the system can maintain efficient cooling performance and prevent potential overheating or inefficiencies within the liquid cooling system **100.** This real-time responsiveness may be important for adapting to varying operational conditions, thereby enhancing the overall reliability and effectiveness of the cooling management strategy.

In the depicted example, the processing circuitry **702,** e.g. the liquid cooling control system **200,** may be configured to obtain the valve position data **P** from the valve position sensor **190.** The valve position data **P** may thus be provided as sensor data. The sensor data may be obtained from said valve position sensor **190.** The valve position data **VP** may thus be a measured value. This may be in contrast to the expected valve position **VPE** which may be an estimated value.

As described with reference to **FIG.3****,** the flow control device **290** may be provided as the first pump **140A** and the second pump **140B.** According to such an example, the flow distribution data may relate to the speed of the first pump **140A** and the second pump **140B.**

In one example, the processing circuitry **702,** e.g. the liquid cooling control system **200,** may be configured to obtain flow distribution data provided as pump speed data. The pump speed data may comprise a pump speed ratio between the first pump **140A** and the second pump **140B.** The processing circuitry **702,** e.g. the liquid cooling control system **200,** may be configured to determine the expected temperature **TE1, TE2, TE3** at the first input port **131,** the second output port **132** and the output port **133** based on the pump speed ratio and the temperature data **T.** The processing circuitry **702,** e.g. the liquid cooling control system **200,** may be configured to determine an expected flow distribution provided as an expected pump speed ratio based on the temperature data **T.** The processing circuitry **702,** e.g. the liquid cooling control system **200,** may be configured to provide control data for control of the liquid cooling system **100** based on at least one of the temperature **T1** or the expected temperature **TE1** at the first input port **131,** the temperature **T2** or the expected temperature **TE2** at the second input port **132,** the temperature **T3** or the expected temperature **TE3** at the output port **133,** and the pump speed ratio or the expected pump speed ratio.

This approach allows the computer system **700** to integrate real-time pump speed data with temperature measurements, enabling dynamic adjustments to the cooling system's operation. By leveraging both current and expected values, the system ensures that the liquid cooling system **100** operates efficiently and reliably, adapting to changes in thermal load and fluid dynamics. This capability may be advantageous for maintaining desirable performance and preventing potential overheating or other inefficiencies within the cooling infrastructure.

In the depicted example, the processing circuitry **702** may be configured to determine the flow ratio based on pump speed data comprising a first pump speed **PS1** associated with a measured speed of the first pump **140A** and a second pump speed **PS2** associated with a measured speed of the second pump **140B.** The pump speed data may be provided as sensor data. The sensor data may be obtained from the first pump sensor **196** and the second pump sensor **197.** The pump speed ratio may thus be a measured value. This may be in contrast to the expected pump speed ratio which may be an estimated value.

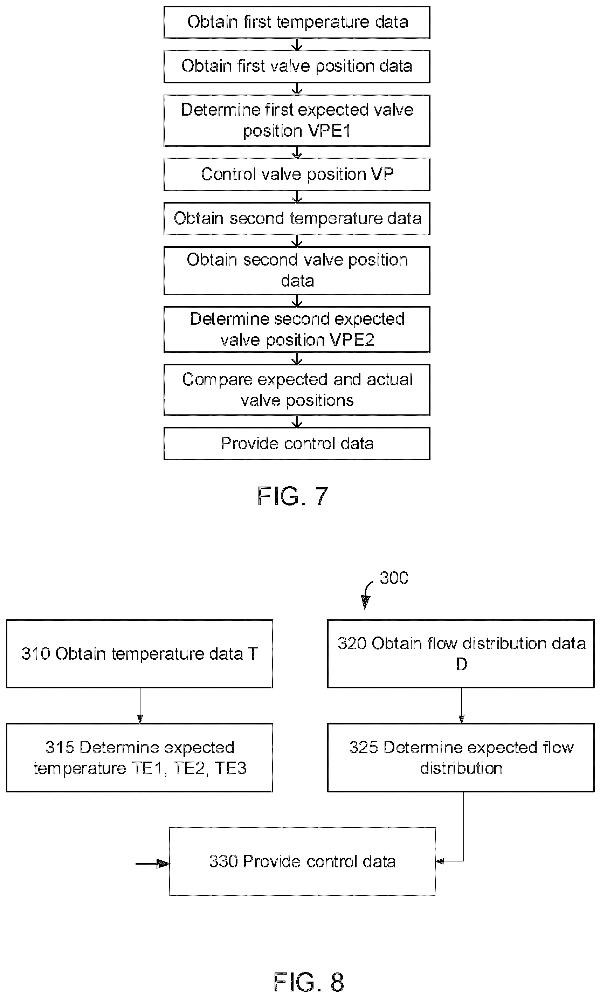

**FIG. 7** depicts an implementation of the present disclosure according to an example. The implementation may involve controlling of the position of fluid valve **130** in order to get temperature data **T** and valve position data **P** for two positions of the fluid valve **130.** By comparing the data, any potential values deviating from a tolerance threshold may be identified indicating for example potentially erroneous sensor readings, faulty components etc. The implementation may be performed by the liquid cooling control system **200.**

The processing circuitry **702** may be configured to obtain first temperature data **T.** The temperature data may comprise the temperatures **T1, T2, T3,** e.g. a first temperature **T1-1, T1-2, T1-3** at a first input port **131,** a second input port **132** and an output port **133** of the fluid valve **130.** The first temperature data **T** may be associated with a first actual position of the fluid valve **130,** e.g. the temperature at the first input port **131,** the second input port **132** and the output port **133** associated with the first actual positon of the fluid valve **130.**

The processing circuitry **702** may be configured to obtain valve position data **P** of the valve position sensor **190.** The valve position data may comprise a first position **VP1** of the fluid valve **130.**

The processing circuitry **702** may be configured to control the fluid valve **130** to change the valve position **VP.** The change may be predetermined and known. Accordingly, the processing circuitry **702** may be configured to control the fluid valve **130** to change the valve positon **VP** by a predetermined amount **AP.**

The processing circuitry **702** may be configured to obtain second temperature data comprising a second temperature **T2-1, T2-2, T2-3** at the first input port **131,** at the second input port **132** and the output port **133** of the fluid valve **130.** The second temperature data **T** may be associated with a second actual position of the fluid valve **130,** e.g. the temperature at the first input port **131,** the second input port **132** and the output port **133** associated with the second actual positon of the fluid valve **130.**

The processing circuitry **702** may be configured to obtain second valve position data **PD2** of the valve position sensor **190** comprising a second position **VP2** of the fluid valve **130.** Advantageously, the second position **VP2** may be associated with the second actual positon of the fluid valve **130.**

The processing circuitry **702** may be configured determine a second expected valve position **VPE2** based on the second temperature data **T** and compare a change in expected valve position and the valve position.

Based on the comparison, the processing circuitry **702** may be configured to provide control data for control of the liquid cooling system **100.**

This control data may facilitate dynamic system adjustments, ensuring that the cooling system maintains high performance and reliability by responding to real-time temperature and positional feedback. This comprehensive approach enhances the overall efficiency of the cooling process, adapting to varying operational demands. Further, the control data may facilitate warnings or alerts in response to deviating values being determined.

**FIG. 8** is a flow chart of a method **300** according to an example. The method **300** is performed by processing circuitry **702** of a computer system **700** for a liquid cooling system **100.** The method **300** may be a computer-implemented method.

The method **300** comprises obtaining **310,** by processing circuitry **702** of the computer system **700,** temperature data **T** comprising the temperature **T1, T2, T3** at the first input port **131,** the second input port **132** and the output port **133** connected to the first input port **131** and the second input port **132** of the liquid cooling system **100.**

The method **300** comprises obtaining **320,** by the processing circuitry **702,** flow distribution data comprising the flow distribution value indicative of the flow from the first and second input port **131, 132** at the output port **133.**

The method **300** comprises determining **315,** by the processing circuitry **702,** the expected temperature **TE1, TE2, TE3** at the first input port **131,** the second input port **132** and the output port **133** based on the flow distribution value and the temperature data **T.**

The method **300** comprises determining **325,** by the processing circuitry **702,** an expected flow distribution based on the temperature data **T.**

The method **300** further comprises providing **330,** by the processing circuitry **702,** control data for control of the liquid cooling system **100.** The control data may be provided based on at least one of the temperature **T1** or the expected temperature **TE1** at the first input port **131,** the temperature **T2** or the expected temperature **TE2** at the second input port **132,** the temperature **T3** or the expected temperature **TE3** at the output port **133,** and the flow distribution value or the expected flow distribution.

The method **300** may further comprise performing any of the examples described herein with reference to **FIG. 1-7****.**

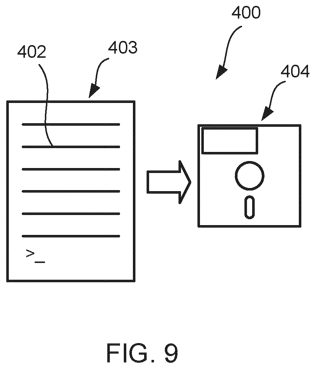

**FIG. 9** is an exemplary diagram of a computer program product **400** according to an example. The computer program product **400** comprises instructions **403** represented by program code **402** for performing, when executed by processing circuitry **702,** the computer implemented method **300** described with reference to **FIG. 8****.** The instructions **402** may be stored on a non-transitory computer-readable storage medium **404.**

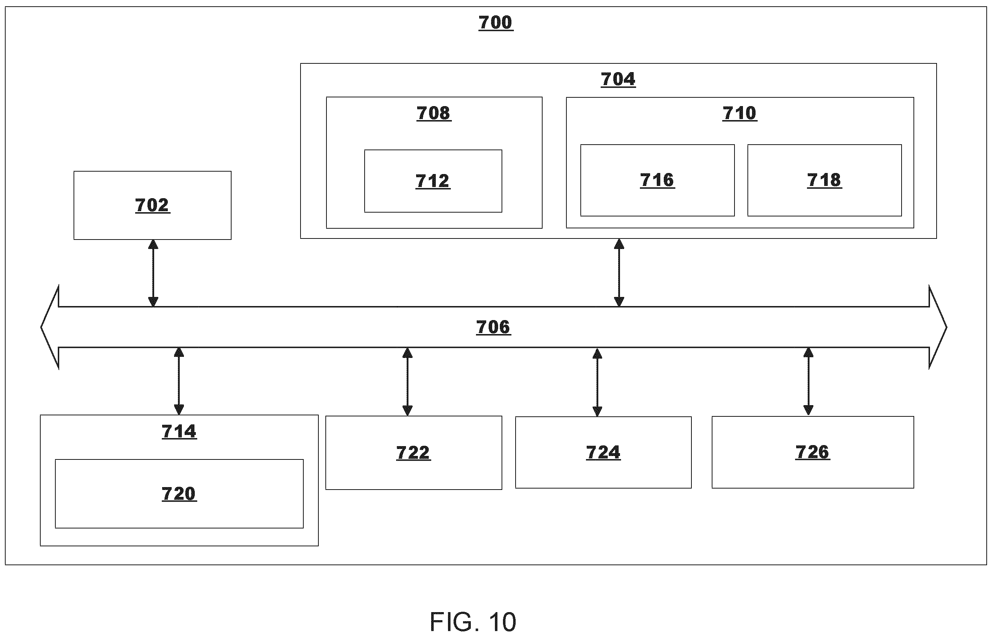

**FIG. 10** is a schematic diagram of a computer system **700** for implementing examples disclosed herein. The computer system **700** is adapted to execute instructions from a computer-readable medium to perform these and/or any of the functions or processing described herein. The computer system **700** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **700** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **700** may comprise at least one computing device or electronic device capable of including firmware, hardware, and/or executing software instructions to implement the functionality described herein. The computer system **700** may include processing circuitry **702** (e.g., processing circuitry including one or more processor devices or control units), a memory **704,** and a system bus **706.** The computer system **700** may include at least one computing device having the processing circuitry **702.** The system bus **706** provides an interface for system components including, but not limited to, the memory **704** and the processing circuitry **702.** The processing circuitry **702** may include any number of hardware components for conducting data or signal processing or for executing computer code stored in memory **704.** The processing circuitry **702** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **702** may further include computer executable code that controls operation of the programmable device.

The system bus **706** may be any of several types of bus structures that may further interconnect to a memory bus (with or without a memory controller), a peripheral bus, and/or a local bus using any of a variety of bus architectures. The memory **704** may be one or more devices for storing data and/or computer code for completing or facilitating methods described herein. The memory **704** may include database components, object code components, script components, or other types of information structure for supporting the various activities herein. Any distributed or local memory device may be utilized with the systems and methods of this description. The memory **704** may be communicably connected to the processing circuitry **702** (e.g., via a circuit or any other wired, wireless, or network connection) and may include computer code for executing one or more processes described herein. The memory **704** may include non-volatile memory **708** (e.g., read-only memory (ROM), erasable programmable read-only memory (EPROM), electrically erasable programmable read-only memory (EEPROM), etc.), and volatile memory **710** (e.g., random-access memory (RAM)), or any other medium which can be used to carry or store desired program code in the form of machine-executable instructions or data structures and which can be accessed by a computer or other machine with processing circuitry **702.** A basic input/output system (BIOS) **712** may be stored in the non-volatile memory **708** and can include the basic routines that help to transfer information between elements within the computer system **700.**

The computer system **700** may further include or be coupled to a non-transitory computer-readable storage medium such as the storage device **714,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **714** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **714** and/or in the volatile memory **710,** which may include an operating system **716** and/or one or more program modules **718.** All or a portion of the examples disclosed herein may be implemented as a computer program **720** stored on a transitory or non-transitory computer-usable or computer-readable storage medium (e.g., single medium or multiple media), such as the storage device **714,** which includes complex programming instructions (e.g., complex computer-readable program code) to cause the processing circuitry **702** to carry out actions described herein. Thus, the computer-readable program code of the computer program **720** can comprise software instructions for implementing the functionality of the examples described herein when executed by the processing circuitry **702.** In some examples, the storage device **714** may be a computer program product (e.g., readable storage medium) storing the computer program **720** thereon, where at least a portion of a computer program **720** may be loadable (e.g., into a processor) for implementing the functionality of the examples described herein when executed by the processing circuitry **702.** The processing circuitry **702** may serve as a controller or control system for the computer system **700** that is to implement the functionality described herein.

The computer system **700** may include an input device interface **722** configured to receive input and selections to be communicated to the computer system **700** when executing instructions, such as from a keyboard, mouse, touch-sensitive surface, etc. Such input devices may be connected to the processing circuitry **702** through the input device
interface **722** coupled to the system bus **706** but can be connected through other interfaces, such as a parallel port, an Institute of Electrical and Electronic Engineers (IEEE) 1394 serial port, a Universal Serial Bus (USB) port, an IR interface, and the like. The computer system **700** may include an output device interface **724** configured to forward output, such as to a display, a video display unit (e.g., a liquid crystal display (LCD) or a cathode ray tube (CRT)). The computer system **700** may include a communications interface **726** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

According to an aspect a computer system, liquid cooling system, vehicle, computer program product and/or computer readable storage medium according to any of the following examples may be provided.

Example 1: A computer system (700) comprising processing circuitry (702) configured to: obtain temperature data (T) comprising a temperature (T1, T2, T3) at a first input port (131), a second input port (132) and an output port (133) connected to the first and second input port (131, 132) of a liquid cooling system (100), obtain flow distribution data comprising a flow distribution value indicative of the flow from the first and second input port (131, 132) at the output port (133), determine an expected temperature (TE1, TE2, TE3) at the first input port (131), the second input port (132) and the output port (133) based on the flow distribution value and the temperature data (T), determine an expected flow distribution based on the temperature data (T), and based on at least one of: - the temperature (T1) or the expected temperature (TE1) at the first input port (131), - the temperature (T2) or the expected temperature (TE2) at the second input port (132), - the temperature (T3) or the expected temperature (TE3) at the output port (133), and - the flow distribution value or the expected flow distribution, provide control data for control of the liquid cooling system (100).

Example 2: The computer system (700) of Example 1, wherein the processing circuitry (702) is further configured to: select: - the temperature (T1) or the expected temperature (TE1) at the first input port (131), - the temperature (T2) or the expected temperature (TE2) at the second input port (132), - the temperature (T3) or the expected temperature (TE3) at the output port (133), and - the flow distribution value or expected flow distribution, as input parameters for the control of the liquid cooling system (100), and provide control data for control of the liquid cooling system (100) based on said input parameters.

Example 3: The computer system (700) of Example 1 or 2, wherein the processing circuitry (702) is further configured to: determine whether the temperatures (T1, T2, T3) and the flow distribution value are unavailable or outside a tolerance range, and responsive to one or more of at least one of said temperatures (T1, T2, T3) and the flow distribution value being unavailable or outside of the tolerance range, provide control data for control of the liquid cooling system (100) based on one or more of the expected temperature (TE1, TE2, TE3) and the expected flow distribution corresponding to one or more of said at least one of the temperatures (T1, T2, T3) and flow distribution value being unavailable or outside of the tolerance range.

Example 4: The computer system (700) of any of Example 1 or 2, wherein the processing circuitry (702) is further configured to: determine whether the temperatures (T1, T2, T3) and the flow distribution value are one or more of available and inside a tolerance range, and responsive to one or more of at least one of said temperatures (T1, T2, T3) and the flow distribution value being one or more of available and inside of the tolerance range, provide control data for control of the liquid cooling system (100) based on one or more of the temperature (T1, T2, T3) and the flow distribution value being available and/or inside of the tolerance range.

Example 5: The computer system (700) of any of Example 1-4, wherein the processing circuitry (702) is further configured to: determine whether the expected temperatures (TE1, TE2, TE3) and the expected flow distribution are unavailable or outside a plausibility range, and responsive to one or more of at least one of said expected temperatures (TE1, TE2, TE3) and the expected flow distribution being unavailable or outside of the plausibility range, provide control data for control of the liquid cooling system (100) based on one or more of the temperature (T1, T2, T3) and flow distribution value corresponding to one or more of said at least one of the expected temperatures (TE1, TE2, TE3) and expected flow distribution being unavailable or outside of the plausibility range.

Example 6: The computer system (700) of any of Example 1-5, wherein the processing circuitry (702) is further configured to: provide control data based on at least one of: - one or more of a blended value based on the temperature (T1) and the expected temperature (TE1) at the first input port (131), a blended value based on the temperature (T2) and the expected temperature (TE2) at the second input port (132) and a blended value based on the temperature (T3) and the expected temperature (TE3) at the output port (133) and a blended value based on the flow distribution value or the expected flow distribution, - one or more of an average value based on the temperature (T1) and the expected temperature (TE1) at the first input port (131), an average value based on the temperature (T2) and the expected temperature (TE2) at the second input port (132) and an average value based on the temperature (T3) and the expected temperature (TE3) at the output port (133) and an average value based on the flow distribution value or the expected flow distribution, - one or more of a weighted average value based on the temperature (T1) and the expected temperature (TE1) at the first input port (131), a weighted average value based on the temperature (T2) and the expected temperature (TE2) at the second input port (132) and a weighted average value based on the temperature (T3) and the expected temperature (TE3) at the output port (133) and a weighted average value based on the flow distribution value or the expected flow distribution.

Example 7: The computer system (700) of any of Example 1-6, wherein the expected temperature (TE1) at the first input port (131) is determined independently from the temperature (T1) at the first input port (131) obtained from the temperature data, the expected temperature (TE2) at the second input port (132) is determined independently from the first temperature (T2) at the second input port (132) obtained from the temperature data, the expected temperature (TE3) at the output port (133) is determined independently from the temperature (T3) at the output port (133) obtained from the temperature data and the expected flow distribution is determined independently from the flow distribution data.

Example 8: The computer system (700) of any of Example 1-7, wherein the temperature data is obtained based on one or more temperature sensors (191, 192, 193) at the output port (133), the first input port (131) and the second input port (132).

Example 9: The computer system (700) of any of Example 1-8, wherein the temperature (T1, T2, T3) at the first and second input port (131, 132) and the output port (133) are based on a thermal model of the liquid cooling system (100).

Example 10: The computer system (700) of any of Example 1-9, wherein the expected temperature (TE3) at the output port (133) is based on the temperature (T1, T2) at the first and/or second input port (131, 132).

Example 11: The computer system (700) of any of Example 1-10, wherein the expected temperature (TE1) at the first input port (131) is based on the temperature (T2, T3) at the second input port (132) and the output port (133).

Example 12: The computer system (700) of any of Example 1-11, wherein the expected temperature (TE2) at the second input port (132) is based on the temperature (T1, T3) at the first input port (131) and the output port (133).

Example 13: The computer system (700) of any of Example 1-12, wherein the first and second input ports (131, 132) form a first and second input port of a fluid valve (130) of the liquid cooling system (100) and the output port (133) forms an output port of said fluid valve (130).

Example 14: The computer system (700) of Example 13, wherein the processing circuitry (702) is further configured to: obtain flow distribution data provided as valve position data (P) comprising a valve position (VP) of the fluid valve (130), determine the expected temperature (TE1, TE2, TE3) at the first input port (131), the second input port (132) and the output port (133) based on the valve position (VP) and the temperature data (T), determine an expected flow distribution provided as an expected valve position (VPE) based on the temperature data (T), and based on at least one of: - the temperature (T1) or the expected temperature (TE1) at the first input port (131), - the temperature (T2) or the expected temperature (TE2) at the second input port (132), - the temperature (T3) or the expected temperature (TE3) at the output port (133), and - the valve position (VP) or the expected valve position (VPE), provide control data for control of the liquid cooling system (100).

Example 15: The computer system (700) of Example 14, wherein the processing circuitry (702) is further configured to: obtain first temperature data comprising a first temperature (T1-1, T1-2, T1-3) at a first input port (131), a second input port (132) and an output port (133) of the fluid valve (130), obtain valve position data (P) of the valve position sensor (190) comprising a first position (VP1) of the fluid valve (130), determine a first expected valve position (VPE1) of the fluid valve (130) based on the first temperature data, control the fluid valve (130) to change the valve position (VP) of the fluid valve (130) by a predetermined amount (AP), obtain second temperature data comprising a second temperature (T2-1, T2-2, T2-3) at the first input port (131), at the second input port (132) and the output port (133) of the fluid valve (130), obtain second valve position data (PD2) of the valve position sensor (190) comprising a second position (VP2) of the fluid valve (130), determine a second expected valve position (VPE2) based on the second temperature data, compare a change in expected valve position and the valve position, and provide control data for control of the liquid cooling system (100) based on said comparison.

Example 16: The computer system (700) of any of Example 14-15, wherein the expected valve position (VPE) is based on the temperature (T1, T2, T3) at the first input port (131), the second input port (132) and the output port (133) of a fluid valve (130).

Example 17: The computer system (700) of any of Example 1-12, wherein the first input port (131) is connected to a first pump (140A) of the liquid cooling system (100) and the second input port (132) is connected to a second pump (140B) of the liquid cooling system (100).

Example 18: The computer system (700) of Example 17, wherein the processing circuitry (702) is further configured to: obtain flow distribution data provided as pump speed data comprising a pump speed ratio between the first pump and the second pump, determine the expected temperature (TE1, TE2, TE3) at the first input port (131), the second input port (132) and the output port (133) based on the pump speed ratio and the temperature data, determine an expected flow distribution provided as an expected pump speed ratio based on the temperature data (T), and based on at least one of: - the temperature (T1) or the expected temperature (TE1) at the first input port (131), - the temperature (T2) or the expected temperature (TE2) at the second input port (132), - the temperature (T3) or the expected temperature (TE3) at the output port (133), and - the pump speed ratio or the expected pump speed ratio, provide control data for control of the liquid cooling system (100).

Example 19: The computer system (700) of Example 1, wherein the processing circuitry (702) is configured to: based on each of: - the temperature (T1) or the expected temperature (TE1) at the first input port (131), - the temperature (T2) or the expected temperature (TE2) at the second input port (132), - the temperature (T3) or the expected temperature (TE3) at the output port (133), and - the pump speed ratio or the expected pump speed ratio, provide control data for control of the liquid cooling system (100), and wherein the processing circuitry (702) is further configured to: select: - the temperature (T1) or the expected temperature (TE1) at the first input port (131), - the temperature (T2) or the expected temperature (TE2) at the second input port (132), - the temperature (T3) or the expected temperature (TE3) at the output port (133), and - the flow distribution value or expected flow distribution, as input parameters for the control of the liquid cooling system (100), and provide control data for control of the liquid cooling system (100) based on said input parameters.

Example 20: A liquid cooling system (100) comprising: a first input port (131) connected to a cool liquid pathway (171) and a second input port (132) connected to a temperate liquid pathway (172) and an output port (133) connected to a temperature controlled device (120), and the computer system (700) of any one of Examples 1-19.

Example 21: The liquid cooling system (100) of Example 20, wherein the temperate liquid pathway (172) is a return path from the temperature controlled device (120).

Example 22: The liquid cooling system (100) of Example 20 or 21, further comprising a circulation device (140) configured to control a flow of liquid in the liquid cooling system (100).

Example 23: The liquid cooling system (100) of any Example 20-22, wherein the temperature controlled device (120) is a fuel cell stack.

Example 24: The liquid cooling system (100) of any of Examples 20-23, further comprising a fluid valve (130), wherein the first and second input ports (131, 132) forms a first and second input port of the fluid valve (130) and the output port (133) forms an output port of said fluid valve (130), wherein said fluid valve (130) is arranged to control flow ratios between the first input port (131) and the second input port (132), and to provide the combined flow ratios at the output port (133) of the fluid valve (130) connected to the temperature controlled device (120).

Example 25: A vehicle (10) comprising the liquid cooling system (100) of any one of Examples 20-24.

Example 26: A computer implemented method (300), comprising: obtaining, by processing circuitry (702) of a computer system (700) temperature data (T) comprising a temperature (T1, T2, T3) at a first input port (131), a second input port (132) and an output port (133) of a fluid valve (130) of a liquid cooling system (100), wherein the fluid valve (130) is arranged to control flow ratios between the first and second input port (131, 132) and the output port (133) of said fluid valve (130), obtaining, by the processing circuitry (702), flow distribution data comprising a flow distribution value indicative of the flow from the first and second input port (131, 132) at the output port (133), determining, by the processing circuitry (702), an expected temperature (TE1, TE2, TE3) at the first input port (131), the second input port (132) and the output port (133) based on the flow distribution value and the temperature data (T), determining, by the processing circuitry (702), an expected flow distribution based on the temperature data (T), and based on at least one of: - the temperature (T1) or the expected temperature (TE1) at the first input port (131), - the temperature (T2) or the expected temperature (TE2) at the second input port (132), - the temperature (T3) or the expected temperature (TE3) at the output port (133), and - the flow distribution value or the expected flow distribution, providing, by the processing circuitry (702), control data for control of the liquid cooling system (100).

Example 27: A computer program product comprising program code for performing, when executed by processing circuitry (702) of a computer system (700), the method (300) of Example 26.

Example 28: A non-transitory computer-readable storage medium comprising instructions, which when executed by processing circuitry (702) of a computer system (700), cause the processing circuitry (702) to perform the method (300) of Example 26.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (700) comprising processing circuitry (702) configured to:
obtain temperature data (T) comprising a temperature (T1, T2, T3) at a first input port (131), a second input port (132) and an output port (133) connected to the first and second input port (131, 132) of a liquid cooling system (100),
obtain flow distribution data comprising a flow distribution value indicative of the flow from the first and second input port (131, 132) at the output port (133),
determine an expected temperature (TE1, TE2, TE3) at the first input port (131), the second input port (132) and the output port (133) based on the flow distribution value and the temperature data (T),
determine an expected flow distribution based on the temperature data (T), and
based on at least one of:
- the temperature (T1) or the expected temperature (TE1) at the first input port (131),
- the temperature (T2) or the expected temperature (TE2) at the second input port (132),
- the temperature (T3) or the expected temperature (TE3) at the output port (133), and
- the flow distribution value or the expected flow distribution,
provide control data for control of the liquid cooling system (100).

2. The computer system (700) of claim 1, wherein the processing circuitry (702) is further configured to:
select:
- the temperature (T1) or the expected temperature (TE1) at the first input port (131),
- the temperature (T2) or the expected temperature (TE2) at the second input port (132),
- the temperature (T3) or the expected temperature (TE3) at the output port (133), and
- the flow distribution value or expected flow distribution,
as input parameters for the control of the liquid cooling system (100), and
provide control data for control of the liquid cooling system (100) based on said input parameters.

3. The computer system (700) of claim 1 or 2, wherein the processing circuitry (702) is further configured to:
determine whether the temperatures (T1, T2, T3) and the flow distribution value are unavailable or outside a tolerance range, and
responsive to one or more of at least one of said temperatures (T1, T2, T3) and the flow distribution value being unavailable or outside of the tolerance range, provide control data for control of the liquid cooling system (100) based on one or more of the expected temperature (TE1, TE2, TE3) and the expected flow distribution corresponding to one or more of said at least one of the temperatures (T1, T2, T3) and flow distribution value being unavailable or outside of the tolerance range.

4. The computer system (700) of any of claim 1 or 2, wherein the processing circuitry (702) is further configured to:
determine whether the temperatures (T1, T2, T3) and the flow distribution value are one or more of available and inside a tolerance range, and
responsive to one or more of at least one of said temperatures (T1, T2, T3) and the flow distribution value being available and/or inside of the tolerance range, provide control data for control of the liquid cooling system (100) based on one or more of the temperature (T1, T2, T3) and the flow distribution value being one or more of available and inside of the tolerance range.

5. The computer system (700) of any of claim 1-4, wherein the processing circuitry (702) is further configured to:
determine whether the expected temperatures (TE1, TE2, TE3) and the expected flow distribution are unavailable or outside a plausibility range, and
responsive to one or more of at least one of said expected temperatures (TE1, TE2, TE3) and the expected flow distribution being unavailable or outside of the plausibility range, provide control data for control of the liquid cooling system (100) based on one or more of the temperature (T1, T2, T3) and flow distribution value corresponding to one or more of said at least one of the expected temperatures (TE1, TE2, TE3) and expected flow distribution being unavailable or outside of the plausibility range.

6. The computer system (700) of any of claims 1-5, wherein the first and second input ports (131, 132) form a first and second input port of a fluid valve (130) of the liquid cooling system (100) and the output port (133) forms an output port of said fluid valve (130).

7. The computer system (700) of claim 6, wherein the processing circuitry (702) is further configured to:
obtain flow distribution data provided as valve position data (P) comprising a valve position (VP) of the fluid valve (130),
determine the expected temperature (TE1, TE2, TE3) at the first input port (131), the second input port (132) and the output port (133) based on the valve position (VP) and the temperature data (T),
determine an expected flow distribution provided as an expected valve position (VPE) based on the temperature data (T), and
based on at least one of:
- the temperature (T1) or the expected temperature (TE1) at the first input port (131),
- the temperature (T2) or the expected temperature (TE2) at the second input port (132),
- the temperature (T3) or the expected temperature (TE3) at the output port (133), and
- the valve position (VP) or the expected valve position (VPE),
provide control data for control of the liquid cooling system (100).

8. The computer system (700) of any of claim 1-5, wherein the first input port (131) is connected to a first pump (140A) of the liquid cooling system (100) and the second input port (132) is connected to a second pump (140B) of the liquid cooling system (100).

9. The computer system (700) of claim 8, wherein the processing circuitry (702) is further configured to:
obtain flow distribution data provided as pump speed data comprising a pump speed ratio between the first pump and the second pump,
determine the expected temperature (TE1, TE2, TE3) at the first input port (131), the second input port (132) and the output port (133) based on the pump speed ratio and the temperature data,
determine an expected flow distribution provided as an expected pump speed ratio based on the temperature data (T), and
based on at least one of:
- the temperature (T1) or the expected temperature (TE1) at the first input port (131),
- the temperature (T2) or the expected temperature (TE2) at the second input port (132),
- the temperature (T3) or the expected temperature (TE3) at the output port (133), and
- the pump speed ratio or the expected pump speed ratio,
provide control data for control of the liquid cooling system (100).

10. The computer system (700) of claim 1, wherein the processing circuitry (702) is configured to:
based on each of:
- the temperature (T1) or the expected temperature (TE1) at the first input port (131),
- the temperature (T2) or the expected temperature (TE2) at the second input port (132),
- the temperature (T3) or the expected temperature (TE3) at the output port (133), and
- the pump speed ratio or the expected pump speed ratio,
provide control data for control of the liquid cooling system (100), and
wherein the processing circuitry (702) is further configured to:
select:
- the temperature (T1) or the expected temperature (TE1) at the first input port (131),
- the temperature (T2) or the expected temperature (TE2) at the second input port (132),
- the temperature (T3) or the expected temperature (TE3) at the output port (133), and
- the flow distribution value or expected flow distribution,
as input parameters for the control of the liquid cooling system (100), and
provide control data for control of the liquid cooling system (100) based on said input parameters.

11. A liquid cooling system (100) comprising:
a first input port (131) connected to a cool liquid pathway (171) and a second input port (132) connected to a temperate liquid pathway (172) and an output port (133) connected to a temperature controlled device (120), and
the computer system (700) of any one of claims 1-10.

12. A vehicle (10) comprising the liquid cooling system (100) of claim 11.

13. A computer implemented method (300), comprising:
obtaining, by processing circuitry (702) of a computer system (700) temperature data (T) comprising a temperature (T1, T2, T3) at a first input port (131), a second input port (132) and an output port (133) connected to the first and second input port (131, 132) of a liquid cooling system (100),
obtaining, by the processing circuitry (702), flow distribution data comprising a flow distribution value indicative of the flow from the first and second input port (131, 132) at the output port (133),
determining, by the processing circuitry (702), an expected temperature (TE1, TE2, TE3) at the first input port (131), the second input port (132) and the output port (133) based on the flow distribution value and the temperature data (T),
determining, by the processing circuitry (702), an expected flow distribution based on the temperature data (T), and
based on at least one of:
- the temperature (T1) or the expected temperature (TE1) at the first input port (131),
- the temperature (T2) or the expected temperature (TE2) at the second input port (132),
- the temperature (T3) or the expected temperature (TE3) at the output port (133), and
- the flow distribution value or the expected flow distribution,
providing, by the processing circuitry (702), control data for control of the liquid cooling system (100).

14. A computer program product comprising program code for performing, when executed by processing circuitry (702) of a computer system (700), the method (300) of claim 13.

15. A non-transitory computer-readable storage medium comprising instructions, which when executed by processing circuitry (702) of a computer system (700), cause the processing circuitry (702) to perform the method (300) of claim 14.
